# FASCICULE DE BREVET EUROPEEN

(11) **EP 3 478 797 B1**
(45) Date de publication et mention de la délivrance du brevet: **18.03.2020**
(21) Numéro de dépôt: 17728482.5
(22) Date de dépôt: 30.05.2017
(51) Int. Cl.: C10G 21/00, C10G 21/14, B01D 1/00, C10G 53/06, C10G 7/06, C10G 21/02, C10G 21/30

(54) **PROCÉDÉ DE TRAITEMENT D'UNE CHARGE HYDROCARBONÉE COMPRENANT UNE ÉTAPE DE DESASPHALTAGE ET UNE ÉTAPE DE CONDITIONNEMENT DE L'ASPHALTEÉ**
VERFAHREN ZUR BEHANDLUNG EINES KOHLENWASSERSTOFFEINSATZES MIT ENTASPHALTIERUNGSSCHRITT UND ASPHALTKONDITIONIERUNGSSCHRITT
METHOD FOR TREATING A HYDROCARBON FEEDSTOCK COMPRISING A DEASPHALTING STEP AND AN ASPHALT CONDITIONING STEP

(30) Priorité: 30.06.2016 FR 1656214
(43) Date de publication de la demande: 08.05.2019
(73) Titulaire: IFP Energies nouvelles, 92852 Rueil-Malmaison (FR)
(72) Inventeur: WEISS, Wilfried, 38540 Valencin (FR); LE COZ, Jean-François, 78100 Saint Germain En Laye (FR)
(74) Mandataire: IFP Energies nouvelles
(86) Numéro de dépôt international: PCT/EP2017/063023
(87) Numéro de publication internationale: WO 2018/001669

(56) Documents cités:
- FR-A- 1 408 708
- FR-A1- 2 598 716
- FR-A1- 3 014 110

## Description

La présente invention concerne le traitement des fractions lourdes d'hydrocarbures contenant entre autre des impuretés soufrées, des métaux et des asphaltènes. Elle concerne plus particulièrement un procédé de traitement de charges lourdes pétrolières de type résidu atmosphérique et/ou résidu sous vide pour la production d'une fraction majoritaire à teneur réduite en impuretés et d'une fraction minoritaire concentrant les impuretés.

Le procédé selon l'invention peut être qualifié comme un procédé à réjection de carbone de type désasphaltage. La fraction majoritaire à teneur réduite en impuretés peut ainsi être plus facilement valorisée telle quelle ou via un autre procédé de raffinage.

Dans le domaine du traitement des fractions lourdes d'hydrocarbures, notamment en désasphaltage, un des problèmes rencontrés réside dans l'opérabilité de la fraction asphalte qui se trouve être à l'origine de phénomènes d'encrassage et de bouchage des unités. Ceci engendre des arrêts fréquents des unités pour nettoyage et nuit à l'efficacité et à la rentabilité de tels procédés.

L'asphalte peut être caractérisé par son point de ramollissement. Un point de ramollissement de 160°C veut dire une viscosité à cette température de 1 million à 2 millions de centistokes (cSt) à cette température. On peut en déduire une viscosité de l'ordre de 500 cSt à la température de sortie d'une unité de strippage d'asphalte (ou stripper selon la terminologie anglo-saxonne) opérée à 280°C. Dans de telles conditions l'évacuation de l'asphalte et son écoulement vers une étape de valorisation de l'asphalte tel que le fluxage, la gazéification, la solidification etc. est imparfait (schéma classique où l'asphalte coule par gravité et par différence de pression entre les deux étapes strippage et solidification).

Il est également connu que la viscosité maximum pour le pompage de la fraction asphalte est de de l'ordre de 2000 cSt, mais pour des raisons de fiabilité d'opération on recommande 200 cSt environ; les procédés pouvant fluctuer en température, il est souvent préférable d'opérer entre 10 à 50°C au-dessus de la température à laquelle la limite de pompabilité est atteinte (2000 cSt).
Ces problèmes posés limitent souvent la valorisation efficace de l'asphalte. L'état de la technique actuel ne permet pas d'extraire des asphaltes ayant un point de ramollissement supérieur à 160°C sous forme liquide, dans des conditions de fiabilité satisfaisantes par rapport au risque de bouchage. FR 3 014 110 divulgue un procédé de traitement d'une charge hydrocarbonée intégrant un désasphaltage.

Un objectif de l'invention est d'améliorer l'efficacité du procédé de traitement en éliminant l'étape unitaire de strippage de l'asphalte qui est généralement constitué d'un équipement susceptible de s'encrasser. L'invention propose notamment de d'intégrer le strippage de l'asphalte et sa solidification dans un système dynamique de conditionnement qui malaxe remue ou broie l'asphalte pendant son refroidissement, au moyen d'un système à vis ou rotatif (interne tournant) afin d'être libéré de la contrainte de viscosité intermédiaire et d'éviter les phénomènes de bouchage.
La demanderesse a donc mis au point un nouveau procédé de désasphaltage intégrant une étape de conditionnement de l'asphalte sous forme solides de manière à le rendre facilement transportable. L'intégration de l'étape de conditionnement de l'asphalte étant particulièrement avantageuse lorsque les conditions de désasphaltage conduisent à l'obtention d'un asphalte à haut point de ramollissement, par exemple lors d'un désasphaltage mettant en œuvre un solvant ou un mélange de solvants de polarité similaire, ou mettant en œuvre un mélange de solvants de polarité différente.

Plus précisément, l'invention concerne un procédé tel que défini dans la revendication 1.

Selon l'invention, la fraction asphalte ou asphalte produit par le procédé présente un point de ramollissement hors solvant et hors fluxant (mesuré selon la méthode Bille et Anneau de la norme EN 1427 ou Ring and Ball de la norme ASTM D36, ou EN 1427) supérieur à 120°C, préférentiellement supérieur à 160°C, plus préférentiellement entre 120 et 250 °C, plus préférentiellement entre 160 et 250 °C, plus préférentiellement entre 120 et 220°C, plus préférentiellement entre 160 et 220°C.

Selon l'invention, les sous-étapes f) et g) sont conduites dans au moins deux sous-unités ou dans une seule unité équipée(s) d'au moins un moyen apte à maintenir en mouvement ou de remuer ou de broyer de manière continue la fraction asphalte, d'au moins un moyen de chauffage et de refroidissement et d'au moins de moyens aptes à évacuer le solvant, le mélange de solvants et/ou le fluxant du procédé.
Parmi les intérêts de la présente invention, on peut noter :
- La possibilité de produire un asphalte sous forme solide à très haut point de ramollissement dont le soutirage peut être facilité par un fluxant de soutirage ;
- L'obtention à haut rendement d'huile désalphatée à teneur réduite en impuretés, valorisable telle quelle ou dans un autre procédé de raffinage ;
- La récupération d'au moins une partie du fluxant de soutirage, du solvant ou du mélange de solvants, ce qui évite sa perte avec l'asphalte ;
- La possibilité d'éliminer l'étape unitaire conventionnelle de strippage (étape d) qui est généralement constitué d'un équipement susceptible de s'encrasser.

### Description des figures

Les descriptions ci-dessous constituent des exemples de mise en œuvre de l'invention sans en limiter la portée. Par souci de simplicité seules les principales étapes sont représentées mais il est entendu que tous les équipements nécessaires au fonctionnement sont présents (ballons, pompes, échangeurs, fours, colonnes, etc.). Seuls les principaux flux sont représentés.

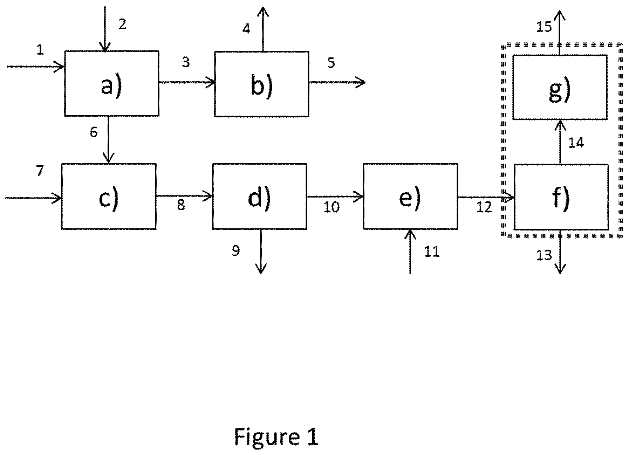

La figure 1 illustre une vue schématique du procédé selon une première mise en œuvre de l'invention:
   - La charge (1) est introduite en mélange avec un solvant ou un mélange de solvants (2) dans une étape a) d'extraction permettant d'obtenir au moins une fraction (3) comprenant de l'huile désasphaltée et du solvant ou du mélange de solvants et une fraction (6) comprenant de l'asphalte et du solvant ou du mélange de solvants. Une partie du solvant ou du mélange de solvants est généralement introduite en mélange avec la charge en un premier point de l'extracteur tandis qu'une autre partie peut être injectée seule en un point différent selon un flux non représenté, ce point étant de préférence plus bas que le premier point, donc proche du fond du même extracteur.
   - Une étape b) de séparation de la fraction (3) comprenant de l'huile désasphaltée et du solvant ou du mélange de solvants issue de l'étape a) d'extraction, permet d'obtenir au moins une huile désasphaltée (5) et une partie du solvant ou du mélange de solvants (4) introduit à l'étape a) d'extraction.
   - Une étape c) d'injection de fluxant de soutirage (7) dans la fraction (6) comprenant de l'asphalte et du solvant ou du mélange de solvants issue de l'étape a) d'extraction, permettant d'obtenir une fraction (8) moins visqueuse que la fraction (6).
   - Une étape d) de séparation de la fraction (8) moins visqueuse comprenant de l'asphalte, du solvant ou du mélange de solvants, et du fluxant de soutirage, issue de l'étape c), permettant de préférence de séparer au moins une fraction asphalte (10) d'au moins une partie du solvant ou du mélange de solvants (9) introduit à l'étape a) d'extraction.
   - Une étape e) d'injection de fluxant de soutirage (11) dans la fraction (10) issue de l'étape d) de séparation, permettant d'obtenir une fraction (12) moins visqueuse que la fraction (10).
   - Une étape de conditionnement de la fraction asphalte issue des étapes a) et/ou c) et/ou d) et/ou e), sous forme solide mise en œuvre en sous-étapes successives ou simultanées :
      o une sous-étape f) de séparation de la fraction (12) issue de l'étape e) permettant de récupérer au moins en partie le fluxant de soutirage introduit dans les étape c) et e) d'injection, éventuellement le solvant ou le mélange de solvants, et une fraction asphalte (14),
      o une sous-étape g) de solidification de l'asphalte (14) issu de la sous-étape f) de séparation permettant de récupérer une fraction asphalte conditionnée sous forme solide (15).

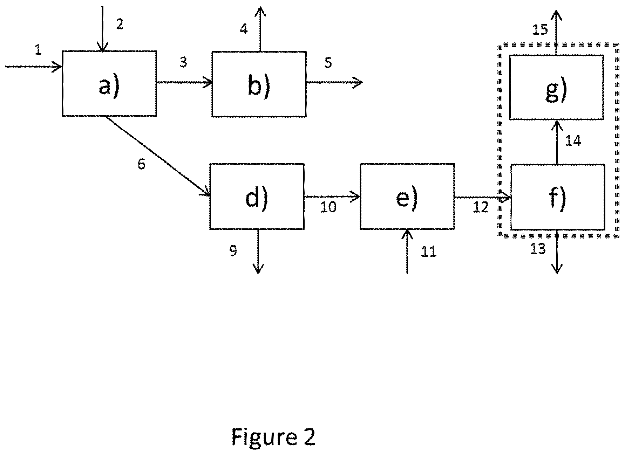

La figure 2 illustre une variante de la mise en œuvre selon la figure 1. Dans cette variante, l'étape c) optionnelle d'injection de fluxant de soutirage n'est pas mise en œuvre et la fraction (6) comprenant de l'asphalte et du solvant ou du mélange de solvants est introduite directement dans l'étape d) de séparation. Le reste de la mise en œuvre est similaire à la description de la figure 1.

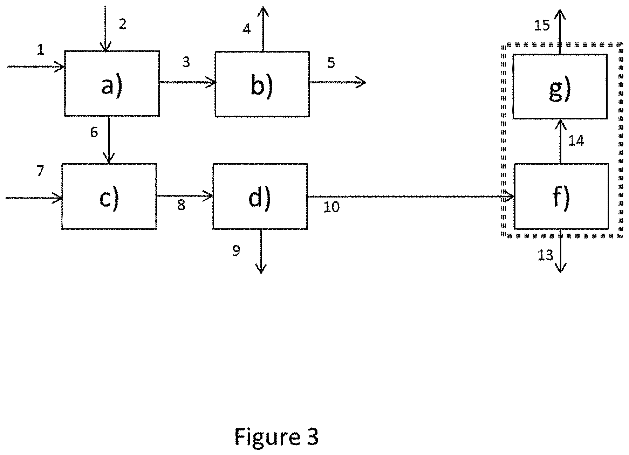

La figure 3 illustre une variante de la mise en œuvre selon la figure 1. Dans cette variante, l'étape e) optionnelle d'injection de fluxant de soutirage n'est pas mise en œuvre et la fraction (10) comprenant de l'asphalte et au moins une partie du fluxant de soutirage introduit à l'étape c), est introduite directement dans l'étape intégrée de conditionnement de la fraction asphalte. Le reste de la mise en œuvre est similaire à la description de la figure 1.

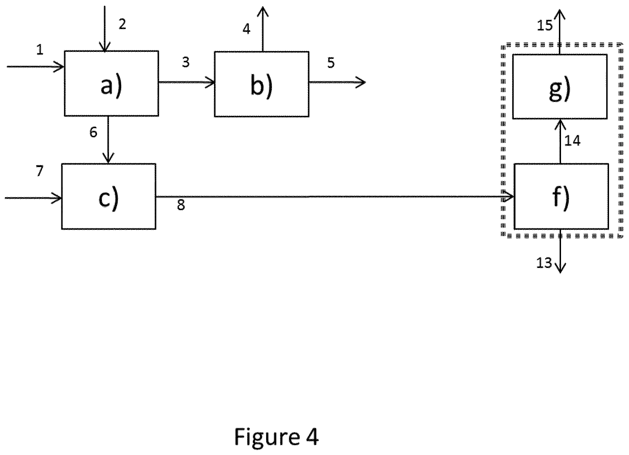

La figure 4 illustre une variante de la mise en œuvre selon la figure 1. Dans cette variante, l'étape d) optionnelle de séparation du solvant ou du mélange de solvants n'est pas mise en œuvre et la fraction (8) comprenant de l'asphalte et du fluxant de soutirage introduit à l'étape c), est introduite directement dans l'étape intégrée de conditionnement de la fraction asphalte au cours de laquelle le solvant ou le mélange de solvants et le fluxant de soutirage seront éliminés. Le reste de la mise en œuvre est similaire à la description de la figure 1.

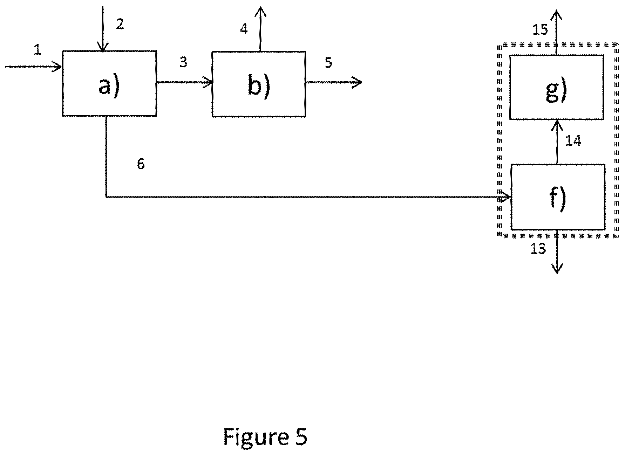

La figure 5 illustre une variante de la mise en œuvre selon la figure 1. Dans cette variantes les étapes c) et e) d'injection de fluxant, ainsi que l'étape d) de séparation ne sont pas mises en œuvre. La fraction (6) comprenant de l'asphalte et du solvant ou du mélange de solvants issue de l'étape a) est introduite directement dans l'étape intégrée de conditionnement de la fraction l'asphalte au cours de laquelle le solvant ou le mélange de solvants seront éliminés. Le reste de la mise en œuvre est similaire à la description de la figure 1.

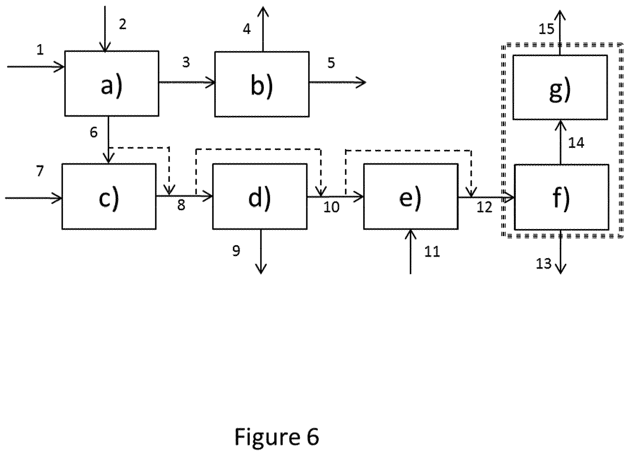

La figure 6 représente de manière schématique toutes les variantes possibles de l'invention avec des flux en pointillés représentant le court-circuitage éventuel de chaque étape optionnelle.

Il est entendu que dans les figures précédentes, le ou les solvants, le ou les fluxants de soutirage qui peuvent être identiques ou différents, issus des étapes de séparation peuvent au moins en partie être recyclés dans le procédé et des appoints peuvent être également effectués.

### Description détaillée

### La charge

La charge traitée dans le procédé selon l'invention est avantageusement une charge hydrocarbonée présentant une teneur en asphaltènes C7 d'au moins 1 % masse, de préférence au moins 2% masse par rapport à la charge, une température initiale d'ébullition d'au moins 340°C, de préférence d'au moins 450°C, et une température finale d'ébullition d'au moins 550°C, de préférence d'au moins 600°C.

La charge hydrocarbonée selon l'invention peut être choisie parmi les résidus atmosphériques, les résidus sous vide issus de distillation directe, des pétroles bruts, des pétroles bruts étêtés, des sables bitumineux ou leurs dérivés, des schistes bitumineux ou leurs dérivés, des huiles de roche mère ou leurs dérivés, pris seuls ou en mélange. Dans la présente invention, les charges que l'on traite sont de préférence des résidus atmosphériques ou des résidus sous vide, ou des mélanges de ces résidus, et plus préférentiellement des résidus sous vide.

La charge hydrocarbonée traitée dans le procédé peut contenir entre autre des impuretés soufrées. La teneur en soufre peut être d'au moins 0,1% en masse, d'au moins 0,5% en masse, préférentiellement d'au moins 1% en masse, plus préférentiellement d'au moins 2% en masse par rapport à la charge.

La charge hydrocarbonée traitée dans le procédé peut contenir entre autre des asphaltènes. La teneur en asphaltènes C7 peut-être d'au moins 1% masse, de préférence d'au moins 2% masse par rapport à la charge.

La charge hydrocarbonée traitée dans le procédé peut contenir entre autre des métaux. La teneur en nickel + vanadium peut-être d'au moins 10 ppm, de préférence d'au moins 30 ppm.

La charge hydrocarbonée traitée dans le procédé peut contenir entre autre du carbone Conradson. La teneur en carbone Conradson peut être d'au moins 2% masse, de préférence d'au moins 5% masse par rapport à la charge.

### Etape a) d'extraction

La charge selon l'invention est soumise à une étape a) d'extraction réalisée de préférence dans des conditions spécifiques permettant d'obtenir une huile désasphaltée de préférence avec un rendement élevé et une fraction asphalte obtenue de préférence en plus faible quantité.

L'étape a) d'extraction peut être réalisée en une ou plusieurs étapes, par mise en contact de la charge avec un solvant contenant des hydrocarbures, de manière à obtenir une fraction asphalte et une fraction huile désasphaltée dite DAO, l'étape a) étant mise en œuvre avantageusement dans les conditions subcritiques pour le solvant ou le mélange de solvants utilisé. Un solvant apolaire ou un mélange de solvants polaire et apolaire peut être utilisé. De préférence, un mélange d'au moins un solvant polaire et d'au moins un solvant apolaire est utilisé.
Lorsque l'étape a) d'extraction est réalisée en utilisant une combinaison de solvants polaire(s) et apolaire(s), cela permet d'aller plus loin dans le maintien de la solubilisation dans la matrice huile de tout ou partie des structures polaires des résines lourdes et des asphaltènes qui sont les principaux constituants de la phase asphalte. On parle alors de désalphatage sélectif tel que mis en œuvre dans le brevet FR 2 999 597B. Le désasphaltage sélectif permet ainsi de choisir quel type de structures polaires restent solubilisées dans la matrice huile désasphaltée. Par conséquent, elle permet de n'extraire sélectivement de la charge qu'une partie de cet asphalte, c'est-à-dire les structures les plus polaires et les plus réfractaires à l'hydrotraitement et à l'hydrocraquage.
L'étape a) peut être réalisée dans une colonne d'extraction ou extracteur, ou dans un mélangeur-décanteur. L'étape a) est de préférence réalisée dans une colonne d'extraction contenant des contacteurs liquide-liquide (éléments de garnissage et/ou plateaux, etc.) placés dans une ou plusieurs zones. De préférence, le solvant ou le mélange de solvants selon l'invention est introduit dans la colonne d'extraction à deux niveaux différents. De préférence, la charge selon l'invention est introduite dans une colonne d'extraction à un seul niveau d'introduction, généralement en mélange avec au moins une partie du solvant et généralement en dessous d'une première zone de contacteurs liquide-liquide. De préférence, l'autre partie du solvant ou mélange de solvants est injectée plus bas que la charge, généralement en dessous d'une seconde zone de contacteurs liquide-liquide, la charge étant injectée au-dessus de cette seconde zone de contacteurs.
L'étape a) est mise en œuvre en conditions subcritiques pour ledit solvant ou mélange de solvants. L'étape a) est mise en œuvre à température d'extraction avantageusement comprise entre 50 et 350°C, de préférence entre 80 et 320°C, de manière plus préférée entre 120 et 310°C, de manière encore plus préférée entre 150 et 300°C, et une pression avantageusement comprise entre 0,1 et 6 MPa, de préférence entre 1 et 6 MPa, de manière plus préférée entre 2 et 5 MPa.

Le rapport ou ratio de volume du solvant ou du mélange de solvants selon l'invention (volume de solvant polaire + volume de solvant apolaire) sur la masse de fraction hydrocarbonée liquide issue de l'étape a) est généralement compris entre 1/1 et 10/1, de préférence entre 2/1 à 8/1 exprimé en litres par kilogrammes. Ce rapport inclus la totalité du solvant ou mélange de solvants pouvant être divisée en plusieurs points d'injection.

Le solvant polaire utilisé peut être choisi parmi les solvants aromatiques purs ou napthéno-aromatiques, les solvants polaires comportant des hétéro-éléments, ou leur mélange. Le solvant aromatique est avantageusement choisi parmi les hydrocarbures monoaromatiques, de préférence le benzène, le toluène ou les xylènes seuls ou en mélange; les diaromatiques ou polyaromatiques; les hydrocarbures naphténo-hydrocarbures aromatiques tels que la tétraline ou l'indane; les hydrocarbures aromatiques hétéroatomiques (oxygénés, azotés, soufrés) ou tout autre famille de composés présentant un caractère plus polaire que les hydrocarbures saturés comme par exemple le diméthylsulfoxyde (DMSO), le di-méthylformamide (DMF), le tétrahydrofurane (THF). Le solvant polaire utilisé dans le procédé selon l'invention peut être une coupe riche en aromatiques. Les coupes riches en aromatiques selon l'invention peuvent être par exemple des coupes issues du FCC (Fluid Catalytic Cracking selon la terminologie anglo-saxonne) telles que l'essence lourde ou le LCO (Light Cycle Oil selon la terminologie anglo-saxonne) ou issues des unités de pétrochimie ou de raffineries. Citons également les coupes dérivées du charbon, de la biomasse ou de mélange biomasse/charbon avec éventuellement une charge pétrolière résiduelle après conversion thermochimique avec ou sans hydrogène, avec ou sans catalyseur. De manière préférée, le solvant polaire utilisé est un hydrocarbure monoaromatique pur ou en mélange avec un hydrocarbure aromatique.

Selon une variante d'extraction mettant en œuvre une combinaison de solvants polaire(s) et apolaire(s), un mélange de solvants polaire(s) et apolaire(s) est injectée en un point tandis qu'un solvant ou un mélange de solvant(s) polaire et apolaire est injecté en un deuxième point. Selon cette variante, de préférence, un solvant polaire plus lourd que le solvant apolaire est injecté dans le point le plus bas.

Le solvant apolaire utilisé est de préférence un solvant composé d'hydrocarbure(s) saturé(s) comprenant un nombre de carbone supérieur ou égal à 3, de préférence compris entre 3 et 9. Ces solvants sont utilisés purs ou en mélange (par exemple: mélange d'alcanes et /ou de cycloalcanes ou bien de coupes pétrolières légères type naphta). De manière préférée, le solvant apolaire contient des hydrocarbures ayant un nombre de carbone supérieur ou égal à 4 et inférieur ou égal à 7, de manière très préférée, le solvant apolaire contient des hydrocarbures ayant un nombre de carbone supérieur ou égal à 5 et inférieur ou égal à 7, ceci de manière à obtenir un asphalte à haut point de ramollissement propice à l'invention et d'obtenir l'huile désasphaltée avec un fort rendement.

Avantageusement, le rapport ou ratio volumique (v/v) du solvant apolaire sur le solvant polaire est supérieur à 50/50, de manière préférée supérieur à 60/40 et manière très préférée supérieur à 70/30.

Avantageusement, le point d'ébullition du solvant polaire du mélange de solvants selon l'invention est supérieur au point d'ébullition du solvant apolaire.

Le choix des conditions de température et de pression de l'extraction combiné au choix de la nature des solvants et au choix de la combinaison éventuelle de solvants apolaire et polaire dans l'étape a) d'extraction (ou de désasphaltage) permettent d'ajuster les performances d'extraction. L'étape a) permet, grâce à des conditions de désasphaltage spécifiques, d'aller plus loin dans le maintien de la solubilisation dans la matrice huile de tout ou partie des structures polaires des résines lourdes et des asphaltènes qui sont les principaux constituants de la phase asphalte dans le cas du désasphaltage classique. Il en résulte un rendement amélioré d'huile désasphaltée.

En tête de la colonne d'extraction ou du mélangeur-décanteur, de préférence au-dessus de la zone de contacteur(s) liquide-liquide située la plus haute, on récupère une fraction qui comprend de l'huile désasphaltée (huile désasphaltée dite DAO) et une partie du solvant ou du mélange de solvants selon l'invention.

En fond de la colonne d'extraction ou du mélangeur-décanteur, de préférence dessous de la zone de contacteur(s) située la plus basse, on récupère une fraction qui comprend de l'asphalte et une partie du solvant ou mélange de solvants selon l'invention.

Le solvant ou mélange de solvants est constitué d'un appoint et/ou d'une partie recyclée lors des étapes b), d) et/ou de la sous-étape f). Ces appoints sont nécessaires pour compenser les pertes de solvant dans la fraction asphalte et/ou la fraction huile désasphaltée. Ces pertes sont faibles mais ne peuvent être évitées du fait des étapes de séparation imparfaites par définition.

### Etape b) de séparation de la fraction comprenant de l'huile désasphaltée

La fraction comprenant de l'huile désasphaltée issue de l'étape a) d'extraction est soumise à une étape b) de séparation permettant d'obtenir au moins une huile désasphaltée et une partie du solvant ou du mélange de solvants introduit à l'étape a) d'extraction. Le solvant ou le mélange de solvants récupéré peut être recyclé en amont de la colonne d'extraction.

Cette étape de séparation permettant de purifier et de séparer l'huile désasphaltée et le solvant peut mettre en œuvre tous les équipements nécessaires connus de l'homme du métier (ballons séparateurs, colonnes de distillation ou de strippage, échangeurs de chaleur, fours, pompes, compresseurs, etc.). Un gaz inerte peut être utilisé pour le strippage.

L'huile désasphaltée contient des teneurs en impuretés inférieures à celles de la charge. Le rendement en huile désasphaltée est élevé, au moins 50% en masse de la charge de départ, de préférence supérieure à 70% en masse de la charge de départ.

L'huile désasphaltée peut avantageusement être valorisée dans un autre procédé de raffinage.

### Etape c) optionnelle d'injection de fluxant

De manière optionnelle, un fluxant de soutirage peut être injecté en mélange avec la fraction comprenant de l'asphalte issue de l'étape a). De manière préférée, le fluxant est injectée en au moins un point dans le fond de la colonne d'extraction utilisée dans l'étape a), ce ou ces points d'injection étant situé(s) en dessous du plus bas point d'injection de solvant ou mélange de solvants introduits dans la colonne d'extraction utilisée dans l'étape a), de préférence en dessous de la zone de contacteur(s) liquide-liquide la plus basse mais au-dessus de la bride de fond de la colonne d'extraction utilisée dans l'étape a), c'est-à-dire au niveau de la sortie de la fraction comprenant l'asphalte.

L'utilisation de fluxant de soutirage facilite l'évacuation de la fraction riche en asphalte par diminution de la viscosité et limite l'encrassement des lignes et équipements situés en aval. L'étape c) et/ou e) d'injection de fluxant de soutirage est avantageuse lorsque le point de ramollissement de l'asphalte est supérieur à 160°C.

Le fluxant est généralement une coupe contenant des hydrocarbures, de préférence aromatiques. Ce fluxant peut avantageusement être choisi parmi les monoaromatiques (benzène, toluène, xylènes), les coupes essences de préférences issues du reformage catalytique ou d'un procédé thermique tel le craquage catalytique, les coupes gazoles de préférence issues de procédé de conversion en l'absence d'hydrogène, par exemple une coupe de type LCO issus d'un procédé de craquage catalytique, ou des extraits aromatiques tels que ceux issus de chaînes de production d'huiles de lubrification. De manière préférée, le fluxant est une essence lourde issue d'un craquage catalytique dont le point final est au maximum de 250°C, de manière plus préférée, l'intervalle d'ébullition du fluxant est compris entre 150 et 220°C.

Le fluxant de soutirage peut être constitué d'un appoint et d'une partie recyclée lors de l'étape d) ou de la sous-étape f). Cet appoint est nécessaire pour compenser les pertes éventuelles qui sont faibles mais ne peuvent être évitées du fait des étapes de séparation imparfaites par définition.

A l'issue de l'étape c), on obtient une fraction comprenant de l'asphalte, du solvant ou mélange de solvants introduit(s) lors de l'étape a).

### Etape d) optionnelle de séparation de la fraction comprenant de l'asphalte

La fraction comprenant de l'asphalte issue de l'étape a) d'extraction ou issue de l'étape c) d'injection de fluxant, peut être soumise à une étape d) optionnelle de séparation permettant de séparer une fraction asphalte seule ou en mélange avec un fluxant de soutirage du solvant ou du mélange de solvants introduit à l'étape a) d'extraction. Le solvant ou le mélange de solvants récupéré peut être recyclé en amont de la colonne d'extraction à l'étape a).

Cette étape de séparation permettant de purifier et de séparer la fraction asphalte du solvant ou du mélange de solvants peut mettre en œuvre tous les équipements nécessaires (ballons séparateurs, colonnes de distillation ou de stripage, échangeurs de chaleur, fours, pompes, compresseurs, etc.). De manière avantageuse, un gaz inerte est injecté en fond de colonne de stripage.

A l'issue de l'étape d), on obtient une fraction asphalte comprenant éventuellement du fluxant si l'étape c) optionnelle d'injection du fluxant a été mise en œuvre. Dans une variante l'étape d) peut permettre de séparer au moins une partie de fluxant, lorsqu'un fluxant est injecté à l'étape c).

### Etape e) optionnelle d'injection de fluxant

De manière optionnelle, un fluxant de soutirage peut être injecté en mélange avec la fraction asphalte issue de l'étape d) comprenant éventuellement du fluxant si l'étape c) optionnelle d'injection du fluxant a été mise en œuvre. De manière préférée, le fluxant est injectée en au moins un point dans le fond de la colonne de strippage utilisée dans l'étape d) lorsqu'elle est mise en œuvre.

L'utilisation de fluxant de soutirage facilite l'évacuation de la fraction riche en asphalte par diminution de la viscosité et limite l'encrassement des lignes et équipements situés en aval. L'étape c) et/ou e) d'injection de fluxant de soutirage est avantageuse lorsque le point de ramollissement de l'asphalte est supérieur à 160°C. Ce fluxant est généralement une coupe contenant des hydrocarbures, de préférence aromatiques, de préférence de même nature que le fluxant définit lors de l'étape c) d'injection du fluxant. Le fluxant de soutirage optionnel peut être constitué d'un appoint et d'une partie recyclée lors de l'étape d) ou de la sous-étape f). Cet appoint est nécessaire pour compenser les pertes éventuelles qui sont faibles mais ne peuvent être évitées du fait des étapes de séparation imparfaites par définition.
A l'issue de l'étape e), on obtient une fraction asphalte comprenant du fluxant.

### Etape intégrée de conditionnement de la fraction asphalte comprenant les sous-étapes f) et g)

### Sous-étape f)

Le procédé de la présente invention comprend une étape intégrée de conditionnement de la fraction asphalte issue des étapes a) et/ou c) et/ou d) et/ou e), sous forme solide mise en œuvre en sous-étapes successives ou simultanées :
- une sous-étape f) pendant laquelle la fraction asphalte est chauffée à une température comprise entre 120 et 340°C et supérieure au point de ramollissement de l'asphalte,
- une sous-étape g) pendant laquelle l'asphalte séparé du solvant, du mélange de solvants et/ou du fluxant est refroidi à une température inférieure au point de ramollissement de l'asphalte.
La sous-étape f) permet de récupérer le solvant ou le mélange de solvants issu de l'étape a) d'extraction en l'absence de l'étape d) (ou lorsque la séparation du solvant ou mélange de solvants en d) est incomplète) et éventuellement le fluxant de soutirage lorsque celui-ci est mis en œuvre lors de l'étape c) et/ou de l'étape e) d'injection de fluxant de soutirage. Cette sous-étape f) permet également de récupérer une fraction asphalte séparé du solvant, du mélange de solvants et/ou du fluxant.

Cette sous-étape f) de séparation est mise en œuvre pour des fractions asphalte ayant un point de ramollissement hors solvant et hors fluxant supérieur à 120°C, préférentiellement supérieur à 160°C, plus préférentiellement entre 120 et 250 °C, plus préférentiellement entre 160 et 250 °C, plus préférentiellement entre 120 et 220°C, plus préférentiellement entre 160 et 220°C. La sous-étape f) de séparation est conduite à une température comprise entre 120 et inférieure ou égale à la température de craquage des hydrocarbures estimée à 340°C (température généralement admise dans les distillations sous vide et ne conduisant pas à un craquage excessif). La sous-étape f) de séparation est de préférence conduite à une température supérieure à la température d'ébullition du solvant, du mélange de solvants et/ou éventuellement du fluxant.
La sous-étape f) de séparation est de préférence conduite à une pression faible, comprise entre 0,1 et 2 MPa, de préférence entre 0,1 et 1 MPa. La sous-étape f) peut être opérée par strippage. La sous-étape f) peut également être opérée sous vide ou alors sous le régime d'une opération unitaire en pression suivie d'une opération unitaire sous vide. Lorsque l'élimination d'au moins une partie du solvant, du mélange de solvants et/ou éventuellement du fluxant est effectuée par strippage lors de la sous-étape f), la pression est de préférence inférieure à la tension de vapeur du solvant, du mélange de solvants et/ou du fluxant que l'on cherche à éliminer.
Cette sous-étape de séparation permettant de purifier et séparer l'asphalte et le solvant ou le mélange de solvants et/ou le fluxant peut mettre en œuvre tous les équipements nécessaires (ballons séparateurs, colonnes de distillation ou de stripage, échangeurs de chaleur, fours, pompes, compresseurs, etc.). Le solvant ou le mélange de solvants et/ou le fluxant) peuvent donc être vaporisés, distillés ou strippés. De manière avantageuse, un gaz inerte peut être injecté pour faciliter le strippage.
Au cours de l'élimination du solvant ou du mélange de solvants et/ou du fluxant, la fraction asphalte devient de plus en plus visqueuse. Il devient alors particulièrement pertinent que la sous-étape f) est réalisée dans une sous-unité ou une unité comprenant l'utilisation d'un équipement permettant de maintenir en mouvement ou de remuer ou de malaxer ou de pétrir mécaniquement la fraction comprenant l'asphalte tout le long de la sous-étape f) et au fur et à mesure de l'élimination du solvant, du mélange de solvants et/ou du fluxant, ceci afin d'éviter le bouchage des équipements.

Pour atteindre la température désirée, la fraction comprenant de l'asphalte issue de l'étape e) peut être chauffée en entrée ou au cours de la sous-étape f), l'idéal étant de préférence que le ou les équipements permettant de maintenir en mouvement la fraction asphalte au cours de l'élimination du solvant, du mélange de solvants et/ou du fluxant, soit équipé d'un système de chauffe. Ce ou ces équipements doivent également permettre par endroit l'évacuation du solvant, du mélange de solvants et/ou du fluxant strippés et/ou vaporisés, par exemple à l'aide d'un ou plusieurs évents, de préférence situé(s) en partie haute du ou des équipements utilisés. Le solvant, le mélange de solvants et/ou le fluxant ainsi récupérés peuvent être condensés et au moins en partie recyclés vers les étapes a) d'extraction, ou les étapes c) et/ou e) d'injection de fluxant.

Parmi les équipements utilisables, la sous-étape f) peut comprendre par exemple des équipements utilisés dans la fabrication des polymères, tels que les équipements de dévolatilisation, les malaxeurs, les réacteurs-extrudeuses, les extrudeuses, les extrudeuses-malaxeuses, les pétrisseurs, les réacteurs-pétrisseurs, les mélangeurs, les mélangeurs réacteurs, les mélangeurs-pétrisseurs. De manière préférée, la sous-étape f) peut comprendre comme équipement principal un réacteur pétrisseur (kneader reactor selon la terminologie anglo-saxonne), de préférence équipé d'un système de chauffe.

La sous-étape f) comporte un dispositif mécanique, par exemple une pompe éventuellement complétée par un système de vannes, permettant d'évacuer l'asphalte vers la sous-étape g) de l'étape intégrée de conditionnement.

### Sous-étape g)

La fraction asphalte issue de la sous-étape f) est soumise à une sous-étape g) visant à obtenir l'asphalte sous forme solide, pour le rendre plus facilement transportable et valorisable.
Il est entendu que lorsque les sous-étapes f) et g) peuvent être mises en œuvre de manière successive, l'asphalte séparé du solvant, du mélange de solvants et/ou du fluxant introduit dans la sous-étape g) est issu de la sous-étape f).
Il est entendu que les sous-étapes f) et g) peuvent être mises en œuvre simultanément dans le cas où les conditions opératoires conduisent à l'entrainement du solvant éventuellement à l'aide d'un gaz inerte de strippage, et lorsque lesdites conditions sont suffisantes pour provoquer le refroidissement simultané de l'asphalte.

Cette sous-étape g) est mise en œuvre pour des fractions asphalte ayant un point de ramollissement hors solvant et hors fluxant (mesuré selon la méthode Bille et Anneau de la norme EN 1427 ou Ring and Ball de la norme ASTM D36) supérieur à 120°C, préférentiellement supérieur à 160°C, plus préférentiellement entre 120 et 250 °C, plus préférentiellement entre 160 et 250 °C, plus préférentiellement entre 120 et 220°C, plus préférentiellement entre 160 et 220°C.
La sous-étape g) est conduite à une température inférieure au point de ramollissement de l'asphalte, de préférence inférieure d'au moins 25°C du point de ramollissement, de préférence inférieure d'au moins 50°C du point de ramollissement, de manière plus préférée inférieure d'au moins 100°C du point de ramollissement. Pour la plupart des asphaltes, ayant par exemple un point de ramollissement compris entre 120 et 250°C, plus l'écart entre la température de refroidissement et le point de ramollissement est élevé, plus la solidification de l'asphalte est facile. Dans les cas où le point de ramollissement de l'asphalte est très élevé, par exemple supérieur à 200°C, la température de la sous-étape g) sera avantageusement inférieure à 200°C, de préférence inférieure à 175°C, de préférence inférieure à 150°C, de manière plus préférée inférieure à 100°C.

La sous-étape g) est de préférence conduite à une pression faible, comprise entre 0,1 et 2 MPa, de préférence entre 0,1 et 1 MPa. La sous-étape g) peut également être opérée en dépression, de préférence en légère dépression, de manière à évacuer les poussières d'asphalte éventuelles vers un système de dépoussiérage. La sous-étape g) peut également comporter une opération unitaire en pression suivie d'une opération unitaire en dépression.

Au cours de la sous-étape g), la fraction asphalte se refroidit, devient plus visqueuse puis elle peut changer d'état et se trouver sous forme solide. Il devient alors particulièrement pertinent que la sous-étape g) puisse être réalisée dans une sous-unité ou une unité comprenant l'utilisation d'un équipement permettant de maintenir en mouvement ou de remuer ou de malaxer ou de pétrir mécaniquement ou de broyer la fraction asphalte tout le long de la sous-étape g) et au fur et à mesure du refroidissement, ceci afin d'obtenir de l'asphalte sous forme solides divisés et d'éviter le bouchage des équipements.

Cette sous-étape de conditionnement peut mettre en œuvre tous les équipements nécessaires (ballons, échangeurs de chaleur, fours, pompes, vannes, etc.). Parmi les équipements utilisables, la sous-étape g) peut comprendre par exemple des malaxeurs, des broyeurs, des réacteurs-extrudeuses, des extrudeuses, des extrudeuses-malaxeuses, des pétrisseurs, des réacteurs-pétrisseurs, des mélangeurs, des mélangeurs réacteurs, des mélangeurs-pétrisseurs.

De manière préférée, la sous-étape g) comprend comme un équipement principal un réacteur pétrisseur ('kneader reactor' selon la terminologie anglo-saxonne), de préférence équipé d'un système de refroidissement.

La sous-étape g) peut comporter un dispositif mécanique, par exemple un tube vibrant éventuellement complétée par des moyens d'évacuation de l'asphalte sous forme solides vers un stockage.

L'équipement des sous-étapes f) et g) peut-être le même de manière à assurer une continuité entre les deux sous-unités.

L'asphalte solides issu de la sous-étape g) peut être sous forme de morceaux d'asphalte (broyats, extrudés ou poudre) dont la plus grande dimension n'excède pas 10 cm, de préférence 5 cm, de manière plus préférée 1 cm. L'état de solides divisés de l'asphalte obtenu dans la sous-étape g) est un critère important qui permet à cette fraction asphalte d'être facilement transportable et valorisable contrairement aux asphaltes liquides qui nécessitent d'être constamment chauffés pour être transportés ou aux asphaltes fluxées qui nécessitent de grande quantité de fluxants.

L'asphalte solide issu du procédé selon l'invention peut par exemple être valorisé comme combustible pour la production de ciments, d'électricité ou de vapeur, ou encore être gazéifié pour produire un gaz de synthèse ou de l'hydrogène.

### EXEMPLES

Les exemples suivants sont réalisés avec une charge **A** résidu sous vide d'origine Arabian Heavy. Les pourcentages sont exprimés en masse (m) sauf indication contraire.

**Tableau 1 : Caractéristiques de la charge A**

| | |
|---|---|
| Densité 15/4 | 1,026 |
| Soufre (% m/m) | 5,4 |
| Carbone Conradson (% m/m) | 22 |
| Asphaltènes C7 (% m/m) (norme NF T60-115) | 12 |
| Ni+V (ppm) | 202 |
| Fraction 540°C+ (% m/m) | 82 |

### Exemple 1

Dans le premier exemple, on réalise désasphaltage conventionnel, soit une extraction de la charge **A** avec le n-pentane comme solvant dans les conditions opératoires présentées dans le tableau 2 (étape a).

**Tableau 2 : Conditions opératoires du désasphaltage conventionnel sur la charge A**

| Solvant | nC5 |
|---|---|
| Ratio solvant /charge (v/m) | 6/1 |
| Pression (MPa) | 4,76 |
| Température (°C) | 180 |

A l'issue de l'étape d'extraction, on obtient une fraction contenant de l'huile désasphaltée et du n-pentane. Cette fraction est soumise à une étape de séparation de manière à séparer le pentane et l'huile désasphaltée (DAO) dont les caractéristiques sont présentées dans le Tableau 3.

**Tableau 3 : Rendements et caractéristiques de l'huile désasphaltée DAO obtenue**

| Rendement DAO (% m/m de la charge) | 65 |
|---|---|
| Densité 15/4 | 0,985 |
| Soufre (% m/m) | 4,3 |
| Carbone Conradson (%) | 10 |
| Ni+V (ppm) | 36 |
| AC7 | <0,05 |

A l'issue de l'étape d'extraction, on obtient également une fraction contenant de l'asphalte et du n-pentane.

Dans une première variante, cette fraction est soumise à une étape de séparation de manière à séparer le n-pentane et l'asphalte (étape d). Un asphalte est obtenu avec 35% masse de rendement par rapport à la charge. Dans une seconde variante, l'étape de séparation d) n'est pas mise en œuvre.

Dans les deux cas, l'asphalte ou la fraction asphalte non séparée est soumis à une étape de conditionnement selon l'invention.

Selon la seconde variante, la fraction asphalte est soumise à une étape de conditionnement permettant à une température de 50°C et à une pression de 0,3 MPa permettant de séparer le n-pentane (sous-étape f)) et de solidifier l'asphalte (sous-étape g)) tout en broyant en continu l'asphalte de manière à l'obtenir sous forme de solides divisés. Le point de ramollissement de l'asphalte est de 150°C, mesuré selon la méthode de la norme ASTM D36. L'appareil utilisé est le Ring and Ball Tester RB36 5G® commercialisé par la société ISL.

### Exemple 2

Dans le second exemple, on réalise un désasphaltage sélectif, soit une extraction de la charge **A** avec un mélange heptane/toluène comme solvant dans les conditions opératoires présentées dans le tableau 4.

**Tableau 4 : Conditions opératoires du désasphaltage sélectif sur la charge A**

| | |
|---|---|
| Ratio solvants heptane/toluène (v/v) | 90/10 |
| Ratio solvent(s) /charge (v/m) | 6/1 |
| Pression (MPa) | 4,17 |
| Température (°C) | 240 |

A l'issue de l'étape d'extraction, on obtient une fraction contenant de l'huile désasphaltée et du mélange de solvants heptane/toluène. Cette fraction est soumise à une étape de séparation de manière à séparer le mélange de solvants heptane/toluène et l'huile désasphaltée (DAO) dont les caractéristiques sont présentées dans le Tableau 5.

**Tableau 5 : Rendements et caractéristiques de l'huile désasphaltée DAO obtenue**

| | |
|---|---|
| Rendement DAO (% m/m) | 90 |
| Densité 15/4 | 1,02 |
| Soufre (% m/m) | 5,05 |
| Carbone Conradson (% m/m) | 18 |
| Ni+V (ppm) | 120 |
| AC7 (% m/m) | 7,0 |

A l'issue de l'étape d'extraction, on obtient également une fraction contenant de l'asphalte et du mélange de solvants heptane/toluène. Le soutirage de cette fraction est facilitée par l'injection d'un fluxant de soutirage : ici une essence lourde venant d'une unité de craquage catalytique (étape c). Le ratio massique fluxant/asphalte est égal à 1.

La fraction contenant l'asphalte, le mélange de solvants heptane/toluène et le fluxant de soutirage est soumise à une étape de séparation de manière à séparer le mélange de solvants heptane/toluène, le fluxant de soutirage de l'asphalte (étape d). L'asphalte est obtenu avec 10% masse de rendement par rapport à la charge.

L'asphalte obtenu soumis à une étape de conditionnement à une température de 90°C et à une pression de 0,3 MPa permettant de séparer les traces de solvants et de fluxants résiduels par strippage notamment (sous-étape f)) et de solidifier l'asphalte (sous-étape g)) tout en broyant en continu l'asphalte de manière à l'obtenir sous forme de solides divisés. Le point de ramollissement de l'asphalte est de 220°C, mesuré selon la méthode de la norme ASTM D36. L'appareil utilisé est le Ring and Ball Tester RB36 5G® commercialisé par la société ISL.

## Revendications

1. Procédé de traitement d'une charge hydrocarbonée contenant des hydrocarbures ayant une teneur en asphaltènes C7 d'au moins 1 % masse par rapport à la charge, une température initiale d'ébullition d'au moins 340°C, et une température finale d'ébullition d'au moins 600°C, ledit procédé comprenant les étapes suivantes :
a) une étape d'extraction de la charge au moyen d'un solvant ou d'un mélange de solvants permettant d'obtenir d'une part au moins une fraction comprenant de l'asphalte et du solvant ou du mélange de solvants, et d'autre part au moins une fraction comprenant de l'huile désasphaltée et du solvant ou du mélange de solvants,
b) une étape de séparation de la fraction comprenant de l'huile désasphaltée et du solvant ou du mélange de solvants issue de l'étape a) d'extraction, permettant de séparer l'huile désasphaltée du solvant ou du mélange de solvants introduit à l'étape a) d'extraction,
c) une étape optionnelle d'injection d'un fluxant de soutirage dans la fraction comprenant de l'asphalte et du solvant ou du mélange de solvants issue de l'étape a) d'extraction,
d) une étape optionnelle de séparation de la fraction comprenant de l'asphalte et du solvant ou du mélange de solvants issu de l'étape a) d'extraction, éventuellement en mélange avec le fluxant de soutirage introduit lors de l'étape c) optionnelle, permettant de séparer une fraction asphalte seule ou en mélange avec un fluxant de soutirage du solvant ou du mélange de solvants introduit à l'étape a) d'extraction,
e) une étape optionnelle d'injection d'un fluxant de soutirage dans la fraction asphalte seule ou en mélange avec un fluxant de soutirage issue de l'étape d),
le procédé étant **caractérisé :**
- **en ce que** l'étape c) et/ou e) d'injection de fluxant de soutirage est (sont) présente(s) lorsque le point de ramollissement de l'asphalte est supérieur à 160°C,
- et **en ce que** ledit procédé comprend une étape de conditionnement de la fraction asphalte issue des étapes a) et/ou c) et/ou d) et/ou e), sous forme solide, mise en œuvre en sous-étapes successives ou simultanées :
- une sous-étape f) pendant laquelle la fraction asphalte est chauffée à une température comprise entre 120 et 340°C et supérieure au point de ramollissement de l'asphalte,
- une sous-étape g) pendant laquelle l'asphalte séparé du solvant, du mélange de solvants et/ou du fluxant est refroidi à une température inférieure au point de ramollissement de l'asphalte,
dans lequel
les sous-étapes f) et g) sont conduites dans au moins deux sous-unités ou dans une seule unité équipée(s) d'au moins un moyen apte à maintenir en mouvement ou de remuer ou de broyer de manière continue la fraction asphalte, d'au moins un moyen de chauffage et de refroidissement et d'au moins de moyens aptes à évacuer le solvant, le mélange de solvants et/ou le fluxant du procédé, et
la fractions asphalte traitée aux sous-étapes f) et g) présente un point de ramollissement hors solvant et hors fluxant supérieur à 120°C.

2. Procédé selon la revendication 1 dans lequel le solvant polaire utilisé est choisi parmi les solvants aromatiques purs ou napthéno-aromatiques, les solvants polaires comportant des hétéroéléments, ou leur mélange.

3. Procédé selon l'une des revendications précédentes dans lequel le solvant apolaire utilisé est un solvant composé d'hydrocarbure(s) saturé(s) comprenant un nombre de carbone supérieur ou égal à 3, de préférence compris entre 3 et 9.

4. Procédé selon l'une des revendications précédentes dans lequel le solvant apolaire contient des hydrocarbures ayant un nombre de carbone supérieur ou égal à 4 et inférieur ou égal à 7, de manière très préférée, le solvant apolaire contient des hydrocarbures ayant un nombre de carbone supérieur ou égal à 5 et inférieur ou égal à 7.

5. Procédé selon l'une des revendications précédentes dans lequel le fluxant est choisi parmi les monoaromatiques, les coupes essences issues du reformage catalytique ou d'un procédé thermique tel le craquage catalytique, les coupes gazoles issues de procédé de conversion en l'absence d'hydrogène, ou des extraits aromatiques tels que ceux issus de chaînes de production d'huiles de lubrification.

6. Procédé selon l'une des revendications précédentes dans lequel lorsque l'étape a) d'extraction met en œuvre une combinaison de solvants polaire(s) et apolaire(s), un mélange de solvants polaire(s) et apolaire(s) est injectée en un point tandis qu'un solvant ou un mélange de solvant(s) polaire et apolaire est injecté en un deuxième point.

7. Procédé selon l'une des revendications précédentes dans lequel la sous-étape f) de séparation est conduite à une température supérieure à la température d'ébullition du solvant, du mélange de solvants et/ou éventuellement du fluxant et à une pression comprise entre 0,1 et 2 MPa ou sous vide, ou alors sous le régime d'une opération unitaire en pression suivie d'une opération unitaire sous vide.

8. Procédé selon la revendication 6 dans lequel lorsque l'élimination d'au moins une partie du solvant, du mélange de solvants et/ou éventuellement du fluxant est effectuée par strippage lors de la sous-étape f), la pression est inférieure à la tension de vapeur du solvant, du mélange de solvants et/ou du fluxant que l'on cherche à éliminer.

9. Procédé selon l'une des revendications précédentes dans lequel la sous-étape f) comporte un dispositif mécanique permettant d'évacuer l'asphalte vers la sous-étape g) de l'étape de conditionnement.

10. Procédé selon l'une des revendications précédentes dans lequel la sous-étape g) est conduite à une température inférieure d'au moins 25°C du point de ramollissement, et à une pression comprise entre 0,1 et 2 MPa ou en dépression ou alors sous le régime d'une opération unitaire en pression suivie d'une opération unitaire en dépression.

11. Procédé selon l'une des revendications précédentes dans lequel la sous-étape f) comprend des équipements choisis parmi les équipements de dévolatilisation, les malaxeurs, les réacteurs-extrudeuses, les extrudeuses, les extrudeuses-malaxeuses, les pétrisseurs, les réacteurs-pétrisseurs, les mélangeurs, les mélangeurs réacteurs, les mélangeurs-pétrisseurs

12. Procédé selon l'une des revendications précédentes dans lequel la sous-étape f) comprend un dispositif mécanique choisi parmi une pompe éventuellement complétée par un système de vannes, permettant d'évacuer l'asphalte vers la sous-étape g) de l'étape intégrée de conditionnement ;

13. Procédé selon l'une des revendications précédentes dans lequel la sous-étape g) comprend des équipements choisis parmi des malaxeurs, des broyeurs, des réacteurs-extrudeuses, des extrudeuses, des extrudeuses-malaxeuses, des pétrisseurs, des réacteurs-pétrisseurs, des mélangeurs, des mélangeurs réacteurs, des mélangeurs-pétrisseurs.

14. Procédé selon l'une des revendications précédentes dans lequel la sous-étape g) comprend un dispositif mécanique choisi parmi un tube vibrant éventuellement complétée par des moyens d'évacuation de l'asphalte sous forme solides vers un stockage.

15. Procédé selon l'une des revendications précédentes dans lequel l'asphalte solides issu de la sous-étape g) est sous forme de morceaux d'asphalte choisi parmi des broyats, des extrudés ou de la poudre, dont la plus grande dimension n'excède pas 10 cm, de préférence 5 cm.

## Patentansprüche

1. Verfahren zur Behandlung eines Kohlenwasserstoffeinsatzmaterials, enthaltend Kohlenwasserstoffe mit einem Gehalt an C7-Asphaltenen von mindestens 1 Gew.-%, bezogen auf das Einsatzmaterial, einen Anfangssiedepunkt von mindestens 340 °C und einen Endsiedepunkt von mindestens 600 °C, wobei das Verfahren die folgenden Schritte umfasst:
a) einen Schritt zum Extrahieren des Einsatzmaterials unter Verwendung eines Lösemittels oder eines Lösemittelgemisches, wodurch zum einen mindestens eine Fraktion, die Asphalt und Lösemittel oder Lösemittelgemisch umfasst, und zum anderen mindestens eine Fraktion, die entasphaltiertes Öl und Lösemittel oder Lösemittelgemisch umfasst, erhalten werden kann,
b) einen Schritt zum Trennen der Fraktion, die entasphaltiertes Öl und Lösemittel oder Lösemittelgemisch umfasst, die aus dem Schritt a) zum Extrahieren stammt, wodurch es möglich ist, das entasphaltierte Öl von dem in dem Schritt a) zum Extrahieren eingebrachten Lösemittel oder Lösemittelgemisch zu trennen,
c) einen optionalen Schritt zum Einspritzen eines Abzugsflussmittels in die Fraktion, die Asphalt und Lösemittel oder Lösemittelgemisch umfasst, die aus dem Schritt a) zum Extrahieren stammt,
d) einen optionalen Schritt zum Trennen der Fraktion, die Asphalt und Lösemittel oder Lösemittelgemisch umfasst, die aus dem Schritt a) zum Extrahieren stammt, gegebenenfalls als Gemisch mit dem Abzugsflussmittel, das während des optionalen Schritts c) eingebracht wurde, wodurch das Trennen einer Asphaltfraktion, allein oder als Gemisch mit einem Abzugsflussmittel, von dem im Schritt a) zum Extrahieren eingebrachten Lösemittel oder Lösemittelgemisch möglich ist,
e) einen optionalen Schritt zum Einspritzen eines Abzugsflussmittels in die Asphaltfraktion, allein oder als Gemisch mit einem Abzugsflussmittel, das aus Schritt d) stammt,
wobei das Verfahren **dadurch gekennzeichnet ist:**
- **dass** Schritt c) und/oder e) zum Einspritzen des Abzugsflussmittels vorhanden ist (sind), wenn der Erweichungspunkt des Asphalts größer als 160 °C ist,
- und dadurch, dass das Verfahren einen Schritt zum Konditionieren der aus den Schritten a) und/oder c) und/oder d) und/oder e) stammenden Asphaltfraktion in fester Form umfasst, der in aufeinanderfolgenden oder gleichzeitigen Teilschritte durchgeführt wird:
- einen Teilschritt f), bei dem die Asphaltfraktion auf eine Temperatur im Bereich zwischen 120 und 340 °C und oberhalb des Erweichungspunkts des Asphalts erhitzt wird,
- einen Teilschritt g), bei dem der vom Lösemittel, vom Lösemittelgemisch und/oder vom Flussmittel getrennte Asphalt auf eine Temperatur unterhalb des Erweichungspunkts des Asphalts abgekühlt wird,
wobei
die Teilschritte f) und g) in mindestens zwei Untereinheiten oder in einer einzigen Einheit durchgeführt werden, die mit mindestens einer Einrichtung, die in der Lage ist, die Asphaltfraktion in Bewegung zu halten oder kontinuierlich zu rühren oder zu mahlen, mit mindestens einer Einrichtung zum Erhitzen und/oder Kühlen und mit mindestens Einrichtungen, die in der Lage sind, das Lösemittel, das Lösemittelgemisch und/oder das Flussmittel aus dem Verfahren abzuführen, ausgestattet ist, und
die in den Teilschritten f) und g) behandelte Asphaltfraktion einen Erweichungspunkt ohne Lösemittel und ohne Flussmittel von mehr als 120 °C aufweist.

2. Verfahren nach Anspruch 1, wobei das verwendete polare Lösemittel aus reinen aromatischen oder naphtenisch-aromatischen Lösemitteln, polaren Lösemittel, die Heteroelemente umfassen, oder einem Gemisch davon ausgewählt ist.

3. Verfahren nach einem der vorhergehenden Ansprüche, wobei das verwendete unpolare Lösemittel ein Lösemittel ist, das aus gesättigtem Kohlenwasserstoff (gesättigten Kohlenwasserstoffen), umfassend eine Kohlenstoffzahl größer oder gleich 3, vorzugsweise im Bereich zwischen 3 und 9, besteht.

4. Verfahren nach einem der vorhergehenden Ansprüche, wobei das unpolare Lösemittel Kohlenwasserstoffe mit einer Kohlenstoffzahl größer oder gleich 4 und kleiner oder gleich 7 enthält, besonders bevorzugt enthält das unpolare Lösemittel Kohlenwasserstoffe mit einer Kohlenstoffzahl größer oder gleich 5 und kleiner oder gleich 7.

5. Verfahren nach einem der vorhergehenden Ansprüche, wobei das Flussmittel ausgewählt ist aus monoaromatischen Verbindungen, Benzinschnitten, die durch katalytische Reformierung oder durch ein thermisches Verfahren wie katalytisches Cracken erhalten werden, Gasölschnitten, die durch ein Umwandlungsverfahren in Abwesenheit von Wasserstoff erhalten werden, oder Aromatenextrakten, wie z B. solchen, die aus Schmierölproduktionslinien erhalten werden.

6. Verfahren nach einem der vorhergehenden Ansprüche, wobei, wenn in Schritt a) zum Extrahieren eine Kombination von polaren und unpolaren Lösemitteln eingesetzt wird, ein Gemisch aus polaren und unpolaren Lösemitteln an einem Punkt eingespritzt wird, während ein Lösemittel oder ein Gemisch aus polaren und unpolaren Lösemitteln an einem zweiten Punkt eingespritzt wird.

7. Verfahren nach einem der vorhergehenden Ansprüche, wobei Teilschritt f) zum Trennen bei einer Temperatur oberhalb des Siedepunkts des Lösemittels, des Lösemittelgemisches und/oder gegebenenfalls des Flussmittels und bei einem Druck zwischen 0,1 und 2 MPa oder unter Vakuum oder alternativ gemäß dem Schema einer Grundoperation unter Druck gefolgt von einer Grundoperation unter Vakuum durchgeführt wird.

8. Verfahren nach Anspruch 6, wobei, wenn das Entfernen von mindestens einem Teil des Lösemittels, des Lösemittelgemisches und/oder gegebenenfalls des Flussmittels durch Strippen während des Teilschritts f) durchgeführt wird, der Druck unterhalb des Dampfdrucks des Lösemittels, des Lösemittelgemisches und/oder des Flussmittels liegt, das entfernt werden soll.

9. Verfahren nach einem der vorhergehenden Ansprüche, wobei der Teilschritt f) eine mechanische Vorrichtung zum Abführen des Asphalts in den Teilschritt g) des Schritts zum Konditionieren umfasst.

10. Verfahren nach einem der vorhergehenden Ansprüche, wobei der Teilschritt g) bei einer Temperatur von mindestens 25 °C unterhalb des Erweichungspunkts und bei einem Druck im Bereich zwischen 0,1 und 2 MPa oder bei einem Unterdruck oder alternativ gemäß dem Schema einer Grundoperation unter Druck gefolgt von einer Grundoperation unter Vakuum durchgeführt wird.

11. Verfahren nach einem der vorhergehenden Ansprüche, wobei der Teilschritt f) Anlagen umfasst, ausgewählt aus Anlagen zur Entgasung, Mischern, Reaktionsextrudern, Extrudern, Mischer-Extrudern, Knetern, Reaktionsknetern, Rührern, Reaktionsrührern, Rührer-Knetern.

12. Verfahren nach einem der vorhergehenden Ansprüche, wobei der Teilschritt f) eine mechanische Vorrichtung umfasst, ausgewählt aus einer Pumpe, die gegebenenfalls durch ein Ventilsystem ergänzt ist, wodurch es möglich ist, den Asphalt in den Teilschritt g) des Schritts zum Konditionieren abzuführen;

13. Verfahren nach einem der vorhergehenden Ansprüche, wobei der Teilschritt g) Anlagen umfasst, ausgewählt aus Mischern, Brechern, Reaktionsextrudern, Extrudern, Extruder-Mischern, Knetern, Reaktionsknetern, Rührern, Reaktionsrührern, Rührer-Knetern.

14. Verfahren nach einem der vorhergehenden Ansprüche, wobei der Teilschritt g) eine mechanische Vorrichtung umfasst, ausgewählt aus einem Schwingrohr, das gegebenenfalls mit Einrichtungen zum Abführen des Asphalts in festen Formen in einen Lagerbehälter ergänzt ist.

15. Verfahren nach einem der vorhergehenden Ansprüche,
wobei der feste Asphalt, der aus dem Teilschritt g) stammt, in Form von Asphaltstücken vorliegt, ausgewählt aus Mahlgut, Extrudaten oder Pulver, deren größte Abmessung nicht größer als 10 cm, bevorzugt 5 cm ist.

## Claims

1. Process for treating a hydrocarbon-based feedstock containing hydrocarbons with a content of C7 asphaltenes of at least 1% by mass relative to the feedstock, an initial boiling point of at least 340°C, and a final boiling point of at least 600°C, said process comprising the following steps:
a) a step of extracting the feedstock using a solvent or a solvent mixture making it possible to obtain, on the one hand, at least one fraction comprising asphalt and solvent or solvent mixture, and, on the other hand, at least one fraction comprising de-asphalted oil and solvent or solvent mixture,
b) a step of separating the fraction comprising de-asphalted oil and solvent or solvent mixture obtained from the extraction step a), making it possible to separate the de-asphalted oil from the solvent or solvent mixture introduced into the extraction step a),
c) an optional step of injecting a withdrawal flux into the fraction comprising asphalt and solvent or solvent mixture obtained from the extraction step a),
d) an optional step of separating the fraction comprising asphalt and solvent or solvent mixture obtained from the extraction step a), optionally as a mixture with the withdrawal flux introduced during the optional step c), making it possible to separate an asphalt fraction alone or as a mixture with a flux for withdrawal of the solvent or solvent mixture introduced into the extraction step a),
e) an optional step of injecting a withdrawal flux into the asphalt fraction alone or as a mixture with a withdrawal flux obtained from step d),
the process being **characterized**
- **in that** step c) and/or e) of injecting the withdrawal flux is (are) present when the softening point of the asphalt is greater than 160°C,
- and **in that** said process comprises a step of conditioning the asphalt fraction obtained from steps a) and/or c) and/or d) and/or e), in solid form, performed as successive or simultaneous substeps:
- a substep f) during which the asphalt fraction is heated to a temperature of between 120 and 340°C and above the softening point of the asphalt,
- a substep g) during which the asphalt separated from the solvent, from the solvent mixture and/or from the flux is cooled to a temperature below the softening point of the asphalt,
in which
substeps f) and g) are performed in at least two subunits or in a single unit equipped with at least one means that is capable of keeping the asphalt fraction in motion or stirring or grinding it continuously, at least one means of heating and cooling and at least means that are capable of removing the solvent, the solvent mixture and/or the flux of the process, and
the asphalt fraction treated in substeps f) and g) has a softening point excluding solvent and excluding flux of greater than 120°C.

2. Process according to Claim 1, in which the polar solvent used is chosen from pure aromatic or naphtheno-aromatic solvents, polar solvents including hetero-elements, or a mixture thereof.

3. Process according to one of the preceding claims, in which the apolar solvent used is a solvent composed of saturated hydrocarbon(s) comprising a carbon number greater than or equal to 3, preferably between 3 and 9.

4. Process according to one of the preceding claims, in which the apolar solvent contains hydrocarbons with a carbon number greater than or equal to 4 and less than or equal to 7, very preferably, the apolar solvent contains hydrocarbons with a carbon number greater than or equal to 5 and less than or equal to 7.

5. Process according to one of the preceding claims, in which the flux is chosen from monoaromatic compounds, gasoline fractions obtained from catalytic reforming or from a thermal process such as catalytic cracking, gas oil fractions obtained from a conversion process in the absence of hydrogen, or aromatic extracts such as those obtained from lubrication oil production lines.

6. Process according to one of the preceding claims, in which, when the extraction step a) uses a combination of polar and apolar solvents, a mixture of polar and apolar solvents is injected into one point, while a solvent or a mixture of polar and apolar solvents is injected into a second point.

7. Process according to one of the preceding claims, in which the separation substep f) is performed at a temperature above the boiling point of the solvent, of the solvent mixture and/or optionally of the flux and at a pressure of between 0.1 and 2 MPa or under vacuum, or alternatively under the regime of an individual pressure operation followed by an individual vacuum operation.

8. Process according to Claim 6, in which, when the removal of at least part of the solvent, of the solvent mixture and/or optionally of the flux is performed by stripping during substep f), the pressure is below the vapour pressure of the solvent, of the solvent mixture and/or of the flux that it is desired to remove.

9. Process according to one of the preceding claims, in which substep f) includes a mechanical device for evacuating the asphalt into substep g) of the conditioning step.

10. Process according to one of the preceding claims, in which substep g) is performed at a temperature at least 25°C below the softening point, and at a pressure of between 0.1 and 2 MPa or under negative pressure, or alternatively under the regime of an individual pressure operation followed by an individual negative pressure operation.

11. Process according to one of the preceding claims, in which substep f) comprises equipment chosen from devolatilization equipment, blenders, extruding reactors, extruders, extruding blenders, kneaders, kneader reactors, mixers, mixing reactors and mixing kneaders.

12. Process according to one of the preceding claims, in which substep f) includes a mechanical device chosen from a pump optionally completed with a valve system for evacuating the asphalt into substep g) of the integrated conditioning step.

13. Process according to one of the preceding claims, in which substep g) comprises blenders, grinders extruding reactors, extruders, extruding blenders, kneaders, kneader reactors, mixers, mixing reactors and mixing kneaders.

14. Process according to one of the preceding claims, in which substep g) includes a mechanical device chosen from a vibrating tube optionally completed with means for evacuating the asphalt in solid form towards storage.

15. Process according to one of the preceding claims, in which the solid asphalt obtained from substep g) is in the form of asphalt pieces chosen from ground matter, extruded matter or powder, the largest dimension of which does not exceed 10 cm, preferably 5 cm.
